# EUROPEAN PATENT APPLICATION

(11) **EP 3 082 067 A1**
(43) Date of publication of application: **19.10.2016**
(21) Application number: 16165410.8
(22) Date of filing: 14.04.2016
(51) Int. Cl.: G06K 9/00, G06K 9/62, G01S 13/86

(54) **STEREOSCOPIC OBJECT DETECTION DEVICE AND STEREOSCOPIC OBJECT DETECTION METHOD**

(30) Priority: 17.04.2015 JP 2015084913
(71) Applicant: Toyota Jidosha Kabushiki Kaisha, Toyota-shi, Aichi-ken, 471-8571 (JP)
(72) Inventor: NISHIJIMA, Masakazu, Aichi-Ken, Aichi 471-8571 (JP)
(74) Representative: D Young & Co LLP

(57) **Abstract**

Within a range where a road surface is detectable by a first detection unit (11), since a stereoscopic object is detected based on the detection result of the first detection unit (11), which has high reliability since the road surface is detectable, by a detection control unit (13) of a stereoscopic object detection device (1). Within a range where the road surface is not detectable by the first detection unit (11), since the stereoscopic object is detected based on the detection result of the first detection unit (11), which has low reliability since the road surface is not detectable, and the detection result of a second detection unit (12) by a millimeter-wave radar with high reliability by the detection control unit (13).

## Description

### TECHNICAL FIELD

The present invention relate to a stereoscopic object detection device and a stereoscopic object detection method.

### BACKGROUND

A technique which detects a stereoscopic object in the surroundings of a vehicle based on image data representing a plurality of images having parallax acquired by imaging the surroundings of the vehicle with an in-vehicle camera from different points of view has been suggested.

For example, US Unexamined Patent Application No. 2014/0071240 discloses a device which detects a road surface and a stereoscopic object in the surroundings of a vehicle based on image data representing a plurality of images having parallax acquired by an in-vehicle stereo camera.

On the other hand, in the device of US Unexamined Patent Application No. 2014/0071240, a stereoscopic object which exists actually may not be detected or a pattern of a road surface or the like is erroneously detected as a stereoscopic object, and improvement is necessary.

Accordingly, an object of the invention is to provide a stereoscopic object detection device and a stereoscopic object detection method capable of improving the reliability of detection of a stereoscopic object.

### SUMMARY

According to an aspect of the invention, a stereoscopic object detection device includes a first detection unit configured to detect a road surface and a stereoscopic object in the surroundings of a vehicle based on image data representing a plurality of images having parallax acquired by imaging the surroundings of the vehicle with an in-vehicle camera from different points of view, a second detection unit configured to detect the stereoscopic object by a millimeter-wave radar, and a detection control unit configured to detect the stereoscopic object based on the detection result of one of the first detection unit and the second detection unit. The detection control unit detects the stereoscopic object based on the detection result of the first detection unit within a range where the road surface is detectable by the first detection unit, and the detection control unit detects the stereoscopic object based on the detection results of the first detection unit and the second detection unit within a range where the road surface is not detectable by the first detection unit.

With this configuration, the stereoscopic object is detected based on the detection result of the first detection unit, which has high reliability since the road surface is detectable, by the detection control unit within a range where the road surface is detectable by the first detection unit; thus, it is possible to detect the stereoscopic object with high accuracy. Furthermore, the stereoscopic object is detected based on the detection result of the first detection unit, which has low reliability since the road surface is not detectable, and the detection result of the second detection unit by the millimeter-wave radar with high reliability by the detection control unit within a range where the road surface is not detectable by the first detection unit. Thus, it is possible to detect the stereoscopic object with high accuracy even within a range where the road surface is not detectable by the first detection unit. Therefore, it is possible to improve the reliability of detection of the stereoscopic object.

In this case, for the stereoscopic object which is not detected by the first detection unit within a time set in advance within a range where the road surface is not detectable by the first detection unit, and whose continuous detection frequency by the first detection unit within a range where the road surface is detectable by the first detection unit exceeds a threshold value, the detection control unit may detect the stereoscopic object based on the detection result of the first detection unit. For the stereoscopic object which is not detected by the first detection unit within the time set in advance within a range where the road surface is not detectable by the first detection unit, and whose continuous detection frequency by the first detection unit within a range where the road surface is detectable by the first detection unit is equal to or less than the threshold value, the detection control unit may detect the stereoscopic object based on the detection results of the first detection unit and the second detection unit.

With this configuration, the stereoscopic object which is not detected by the first detection unit within a range where the road surface is not detectable by the first detection unit, whose continuous detection frequency by the first detection unit exceeds the threshold value within a range where the road surface is detectable by the first detection unit, and for which the detection result of the first detection unit is considered to have high reliability is detected based on the detection result of the first detection unit by the detection control unit. The stereoscopic object which does not satisfy the condition is detected based on the detection results of the first detection unit and the second detection unit by the detection control unit. Thus, it is possible to prevent the stereoscopic object from being detected based on an erroneous detection result of the first detection unit.

The stereoscopic object detection device may further include a vehicle control unit configured to execute vehicle control for controlling one of acceleration, deceleration, and steering of the vehicle according to the stereoscopic object detected by the detection control unit.

With this configuration, since vehicle control for controlling one of acceleration, deceleration, and steering is executed by the vehicle control unit according to the stereoscopic object detected by the detection control unit with high reliability; it is possible to prevent the execution of vehicle control based on an erroneous detection result.

According to another aspect of the invention, a stereoscopic object detection method includes a first detection step of detecting a road surface and a stereoscopic object in the surroundings of a vehicle based on image data representing a plurality of images having parallax acquired by imaging the surroundings of the vehicle with an in-vehicle camera from different points of view by a first detection unit of a stereoscopic object detection device, a second detection step of detecting the stereoscopic object by a millimeter-wave radar by a second detection unit of the stereoscopic object detection device, and a detection control step of detecting the stereoscopic object based on the detection result of one of the first detection step and the second detection step by a detection control unit of the stereoscopic object detection device. In the detection control step, the stereoscopic object is detected based on the detection result of the first detection step by the detection control unit within a range where the road surface is detectable by the first detection unit, and the stereoscopic object is detected based on the detection results of the first detection step and the second detection step within a range where the road surface is not detectable by the first detection unit.

In this case, in the detection control step, for the stereoscopic object which is not detected by the first detection unit within a time set in advance within a range where the road surface is not detectable by the first detection unit, and whose continuous detection frequency by the first detection unit within a range where the road surface is detectable by the first detection unit exceeds a threshold value, the stereoscopic object may be detected based on the detection result of the first detection unit by the detection control unit. For the stereoscopic object which is not detected by the first detection unit within the time set in advance within a range where the road surface is not detectable by the first detection unit, and whose continuous detection frequency by the first detection unit within a range where the road surface is detectable by the first detection unit is equal to or less than the threshold value, the stereoscopic object may be detected based on the detection results of the first detection unit and the second detection unit by the detection control unit.

The stereoscopic object detection method may further include a vehicle control step of executing vehicle control for controlling one of acceleration, deceleration, and steering of the vehicle according to the stereoscopic object detected by the detection control unit by a vehicle control unit of the stereoscopic object detection device.

According to an aspect and another aspect of the invention, it is possible to improve the reliability of detection of the stereoscopic object.

### BRIEF DESCRIPTION OF THE DRAWINGS

FIG. 1 is a block diagram showing a stereoscopic object detection device of an embodiment.
FIG. 2 is a flowchart showing the operation of the stereoscopic object detection device of FIG. 1.
FIG. 3 is a diagram showing an example of a road surface represented in a V-disparity plane.
FIG. 4 is a diagram showing an example of a detection result for a road surface by V-disparity.
FIG. 5 is a diagram showing a parallax map where the horizontal axis represents a transverse position in a parallax image and the vertical axis represents parallax.
FIG. 6 is a diagram showing an example where a detection result for a stereoscopic object is superposed on a captured image.
FIG. 7 is a diagram showing an example where a detection result for a stereoscopic object is superposed on an overhead view plane.
FIG. 8 is a diagram showing another example of a detection result for a road surface by V-disparity.
FIG. 9 is a diagram showing another example where a detection result for a stereoscopic object is superposed on a captured image.
FIG. 10 is a diagram showing another example where a detection result for a stereoscopic object is superposed on an overhead view plane.

### DETAILED DESCRIPTION

Hereinafter, a stereoscopic object detection device and a stereoscopic object detection method according to an embodiment of the invention will be described referring to the drawings.

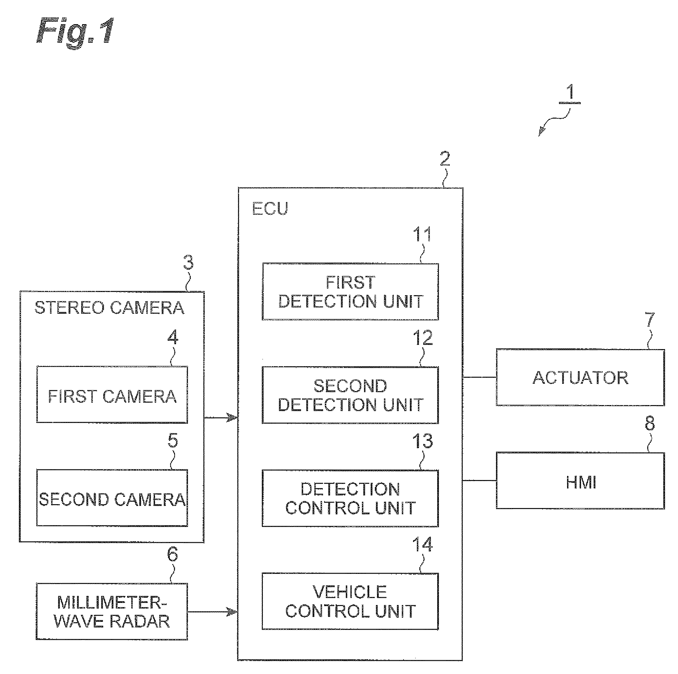

As shown in FIG. 1, a stereoscopic object detection device 1 according to a first embodiment is mounted in, for example, a vehicle, such as a passenger vehicle, and detects a stereoscopic object in the surroundings of the vehicle. A stereoscopic object is, for example, an object protruding from the road surface in the surroundings of the vehicle. A stereoscopic object also includes an object separated from the road surface or an object integrated with the road surface. The road surface is, for example, the surface of a road on which the vehicle can travel. The road surface may include a road surface of a passage in a parking lot or car park or a parking space, in addition to the surface of the road on which the vehicle V travels.

The stereoscopic object detection device 1 includes an electronic control unit (ECU) 2 for detecting a stereoscopic object, a stereo camera (in-vehicle camera) 3, a millimeter-wave radar 6, an actuator 7, and an HMI 8. The ECU 2 is an electronic control unit having a central processing unit (CPU), a read only memory (ROM), a random access memory (RAM), and the like. The ECU 2 loads a program stored in the ROM is loaded into the RAM and execute the program on the CPU, thereby executing various kinds of processing. The ECU 2 may be constituted of a plurality of electronic control units.

The stereo camera 3 is an image acquisition apparatus which acquires a plurality of images having parallax acquired by imaging the surroundings of the vehicle with an in-vehicle camera from different points of view. The stereo camera 3 has a first camera 4 and a second camera 5 arranged so as to reproduce binocular parallax. The first camera 4 and the second camera 5 are provided on, for example, the rear side (or interior) of a windshield of the vehicle, and image in front of the vehicle.

The first camera 4 and the second camera 5 are attached, for example, at a predetermined interval in a horizontal direction; thus, if an object is imaged, a left image and a right image as a plurality of images having parallax are obtained. The obtained two images have parallax. For this reason, it is possible to acquire a parallax image including information relating to parallax at each of parallax points as corresponding points between the two images from the two images. It is possible to determine the distance between a road surface and a stereoscopic object at each parallax point based on the parallax image according to the principle of triangulation.

The first camera 4 and the second camera 5 may be provided in the side portions of the vehicle or in the rear portion of the vehicle (for example, the rear side of the rear windscreen), and may image sideways or at the rear of the vehicle. The stereo camera 3 may acquire three or more images having parallax by imaging the surroundings of the vehicle with three or more cameras from three or more points of view. The stereo camera 3 transmits image data representing a plurality of captured images having parallax to the ECU 2.

The stereoscopic object detection device 1 may include a monocular camera, instead of the stereo camera 3. In the monocular camera, it is possible to obtain a parallax image using a known method (for example, a method using a time difference at the time of imaging).

The millimeter-wave radar 6 is provided, for example, at the front end of the vehicle body of the vehicle and the rear end of the vehicle body of the vehicle, and detects a stereoscopic object in front of and at the rear of the vehicle using millimeter waves. The millimeter-wave radar 6 may be further provided on the side surfaces of the vehicle, and may detect a stereoscopic object at the side of the vehicle. For example, the millimeter-wave radar 6 transmits millimeter waves in front of and to the back of the vehicle, and receives millimeter waves reflected by a stereoscopic object, such as another vehicle, thereby detecting a stereoscopic object. The stereoscopic object is detected as a plurality of detection points. The millimeter-wave radar 6 transmits the detected stereoscopic object information to the ECU 2. The stereoscopic object information includes information relating to the direction and distance of the stereoscopic object (each detection point).

The actuator 7 is a device which executes traveling control of the vehicle. The actuator 7 includes at least a throttle actuator, a brake actuator, and a steering actuator. The throttle actuator controls the supply amount (throttle opening) of air to an engine according to a control signal from the ECU 2, and controls a drive force of the vehicle. When the vehicle is a hybrid vehicle or an electric vehicle, the throttle actuator is not included, and a control signal from the ECU 2 is input to a motor as a power source and the drive force is controlled.

The brake actuator controls a brake system according to a control signal from the ECU 2, and controls a braking force applied to the wheels of the vehicle. As the brake system, for example, a hydraulic brake system can be used. The steering actuator controls the driving of an assist motor for controlling steering torque in an electric power steering system according to a control signal from the ECU 2. With this, the steering actuator controls steering torque of the vehicle.

The HMI 8 is an interface for outputting and inputting information between an occupant (including a driver) of the vehicle and the stereoscopic object detection device 1. The HMI 8 includes, for example, a display panel for displaying image information to the occupant, a speaker for sound output, operation buttons or a touch panel for an input operation of the occupant, and the like. The HMI 8 may output information to the occupant using a personal digital assistant connected in a wireless manner and may receive an input operation of the occupant using the personal digital assistant.

Next, the functional configuration of the ECU 2 will be described. As shown in FIG. 1, the ECU 2 includes a first detection unit 11, a second detection unit 12, a detection control unit 13, and a vehicle control unit 14. The first detection unit 11 detects a road surface and a stereoscopic object in the surroundings of the vehicle based on image data representing a plurality of images having parallax acquired by imaging the surroundings of the vehicle with the stereo camera 3 from different points of view.

The second detection unit 12 detects a stereoscopic object by the millimeter-wave radar 6. The second detection unit 12 detects the stereoscopic object by detecting a plurality of detection points based on the stereoscopic object information from the millimeter-wave radar 6 and recognizing the direction and distance of each detection point when viewed from the millimeter-wave radar 6.

The detection control unit 13 detects the stereoscopic object based on the detection result of one of the first detection unit 11 and the second detection unit 12. In more detail, the detection control unit 13 detects the stereoscopic object based on the detection result of the first detection unit 11 within a range where the road surface is detectable by the first detection unit 11, and detects the stereoscopic object based on the detection results of the first detection unit 11 and the second detection unit 12 within a range where the road surface is not detectable by the first detection unit 11. The details of a method of selecting the detection result of one of the first detection unit 11 and the second detection unit 12 will be described below.

The vehicle control unit 14 executes vehicle control for controlling one of acceleration, deceleration, and steering of the vehicle according to the stereoscopic object detected by the detection control unit 13. The vehicle control according to the stereoscopic object is performed based on, for example, the distance, position, size, speed, and the like of the stereoscopic object. The vehicle control unit 14 outputs a control signal to the actuator 7 to control acceleration of the vehicle by the throttle actuator of the actuator 7, to control deceleration of the vehicle by the brake actuator of the actuator 7, and to control steering by the steering actuator of the actuator 7. The vehicle control unit 14 provides information necessary for the occupant through the HMI 8 according to the stereoscopic object detected by the detection control unit 13.

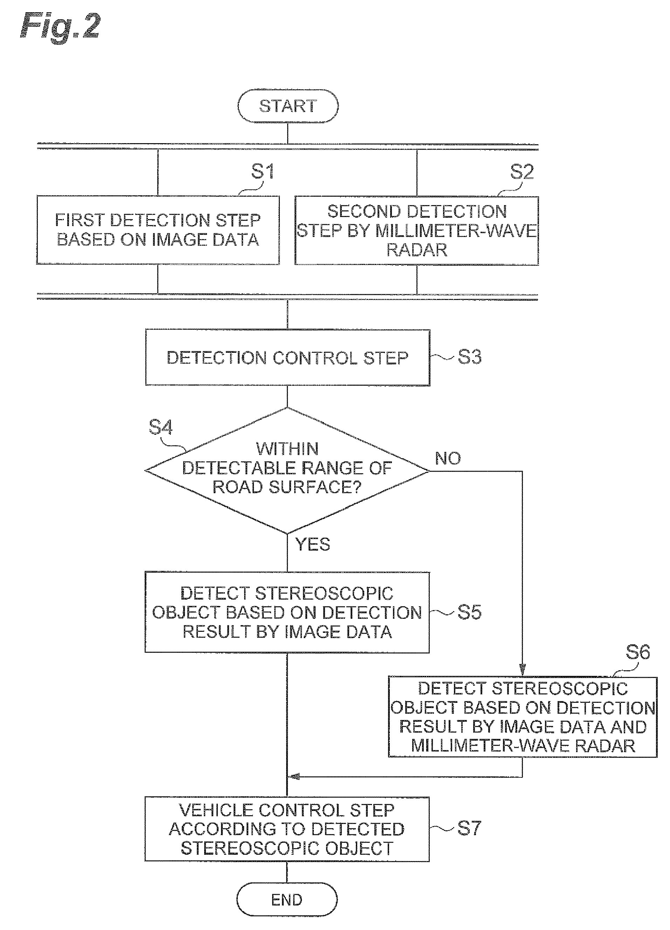

Hereinafter, the operation of the stereoscopic object detection device 1 of this embodiment will be described. As shown in FIG. 2, as a first detection step, the road surface and the stereoscopic object in the surroundings of the vehicle are detected based on image data representing a plurality of images having parallax acquired by imaging the surroundings of the vehicle with the stereo camera 3 from different points of view by the first detection unit 11 of the ECU 2 of the stereoscopic object detection device 1 (S1).

The first detection unit 11 detects the road surface in the surroundings of the vehicle based on parallax at the parallax point.

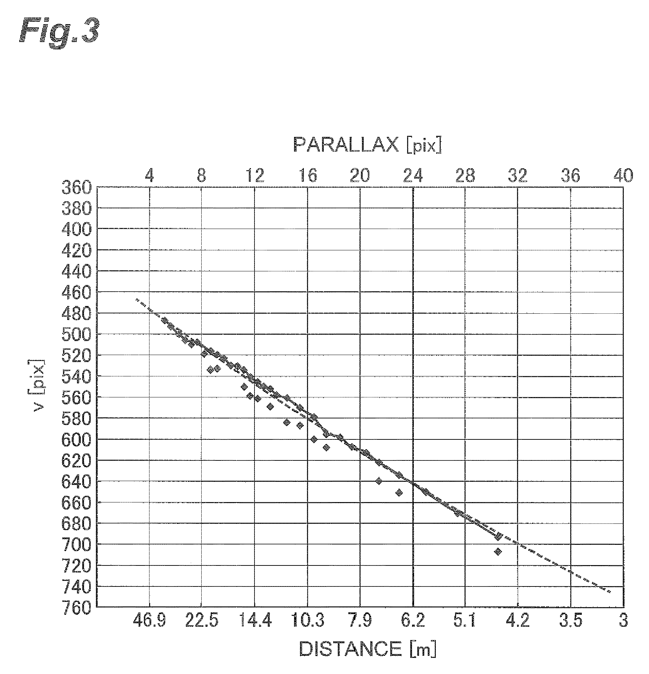

The detection of the road surface based on parallax at the parallax point can be performed by known v-disparity. As shown in FIG. 3, v-disparity is a graph in which the horizontal axis represents parallax (the distance indicated by parallax), the vertical axis represents the coordinates in the vertical direction in the parallax image, and a histogram in the horizontal direction with respect to the parallax image is determined. In the parallax image, the area of the road surface smoothly decreases in parallax (increases in the distance indicated by parallax) when the coordinates of the parallax image in the vertical direction change upward. For this reason, as shown in FIG. 3, in the v-disparity plane, the road surface is projected as a line segment extending in an oblique direction.

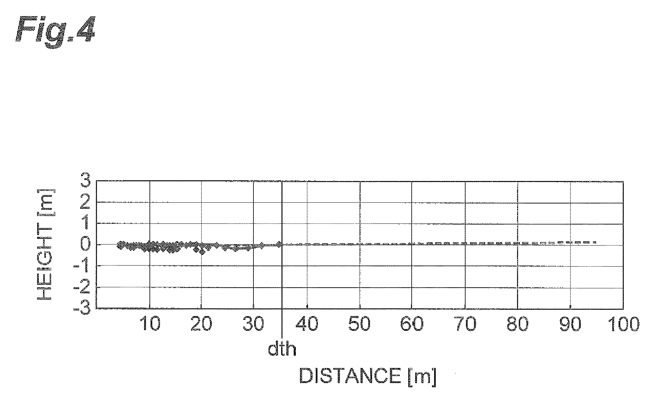

The road surface is estimated based on v-disparity as shown in FIG. 4. In the stereo camera 3, when the distance increases, parallax becomes small, and it is difficult to reliably detect the road surface by the parallax point. In this embodiment, the threshold value of the distance in which the road surface can be detected from the parallax point of the parallax image is referred to as a road surface detection distance dₜₕ. The distance within the road surface detection distance dₜₕ from the vehicle is defined as the range where the road surface is detectable. The road surface detection distance dₜₕ changes according to the traveling environment where the vehicle travels. Even when the road surface cannot be reliably detected from the parallax point, as indicated by a broken line in FIG. 4, a distant road surface may be estimated based on a gradient on a short distance side from the vehicle. However, in this embodiment, the distance equal to or less than the road surface detection distance dₜₕ is set as the range where the road surface can be reliably detected, and the road surface is detected by the parallax point, whereby it is possible to cope with the change in the gradient of the distant road surface. In the example of FIG. 4, the distance of 35 m from the vehicle is the road surface detection distance dₜₕ.

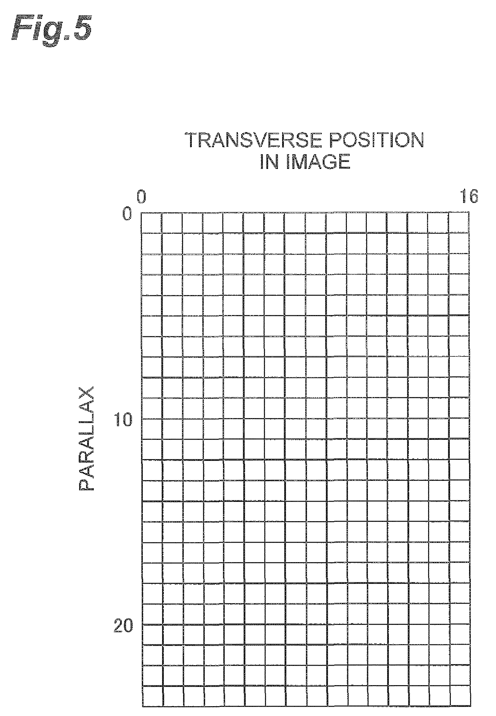

The first detection unit 11 detects the stereoscopic object based on the road surface detected in the above-described manner and the parallax point. The first detection unit 11 sets a parallax vote map shown in FIG. 5. The parallax vote map of FIG. 5 is constituted by arranging a plurality of rectangular blocks determined such that a side in a transverse direction corresponds to the coordinates of the parallax image in a horizontal direction and a side in a longitudinal direction corresponds to the magnitude of parallax. Each of a plurality of rectangular blocks of the parallax vote map indicates a set of parallax points having the coordinates in the horizontal direction within the set range and parallax within the set range in the parallax image.

The first detection unit 11 classifies (votes) the corresponding parallax points into each block of the parallax vote map shown in FIG. 5. The first detection unit 11 stores the horizontal coordinates of each parallax point in the parallax image, parallax at each parallax point, the vertical coordinates of each parallax point in the parallax image, and the number of parallax points in association with each block of the parallax vote map. For example, when a stereoscopic object exists on a road surface, and when a large number of parallax points having the same degree of parallax and the vertical coordinates higher than the vertical coordinates of the parallax points of the road surface detected in the above-described manner in a plurality of adjacent blocks of the parallax vote map, it can be estimated that the parallax points indicate a stereoscopic object. In the above-described manner, the first detection unit 11 detects the road surface and the stereoscopic object in the surroundings of the vehicle.

As shown in FIG. 2, as a second detection step, the second detection unit 12 of the ECU 2 of the stereoscopic object detection device 1 detects a stereoscopic object by the millimeter-wave radar 6 (S2). As a detection control step, the stereoscopic object is detected based on the detection result of one of the first detection step and the second detection step by the detection control unit 13 of the ECU 2 of the stereoscopic object detection device 1 (S3). In the detection control step, within a range where the road surface is detectable by the first detection unit 11 (S4), the stereoscopic object is detected based on the detection result of the first detection step by the detection control unit 13 (S5). Meanwhile, within a range where the road surface is not detectable by the first detection unit 11 (S4), the stereoscopic object is detected based on the detection results of the first detection step and the second detection step by the detection control unit 13 (S6).

When the stereoscopic object is detected based on the detection result of the first detection unit 11, for example, this means that the stereoscopic object is detected only based on the detection result of the first detection unit 11. When the stereoscopic object is detected based on the detection results of the first detection unit 11 and the second detection unit 12, for example, this means that, when the stereoscopic object is detected based on the detection result of the first detection unit 11 and the stereoscopic object is detected based on the detection result of the second detection unit 12, the existence of the stereoscopic object is detected.

In the detection control step, for the stereoscopic object which is not detected by the first detection unit 11 within a time set in advance within a range where the road surface is not detectable by the first detection unit 11, and whose continuous detection frequency by the first detection unit 11 within a range where the road surface is detectable by the first detection unit 11 exceeds a threshold value (for example, two) of the first detection unit 11, the stereoscopic object is detected based on the detection result of the first detection unit 11 by the detection control unit 13. For the stereoscopic object which is detected by the first detection unit 11 even only once with the time set in advance within a range where the road surface is not detectable by the first detection unit 11, the detection frequency is initialized to zero by the detection control unit 13.

For the stereoscopic object which is not detected by the first detection unit 11 within the time set in advance within a range where the road surface is not detectable by the first detection unit 11, and whose continuous detection frequency by the first detection unit 11 within a range where the road surface is detectable by the first detection unit is equal to or less than the threshold value, the stereoscopic object is detected based on the detection results of the first detection unit 11 and the second detection unit 12 by the detection control unit 13. The time set in advance may be set to be longer when the distance from the vehicle increases. The threshold value may be set to be greater when the distance from the vehicle increases.

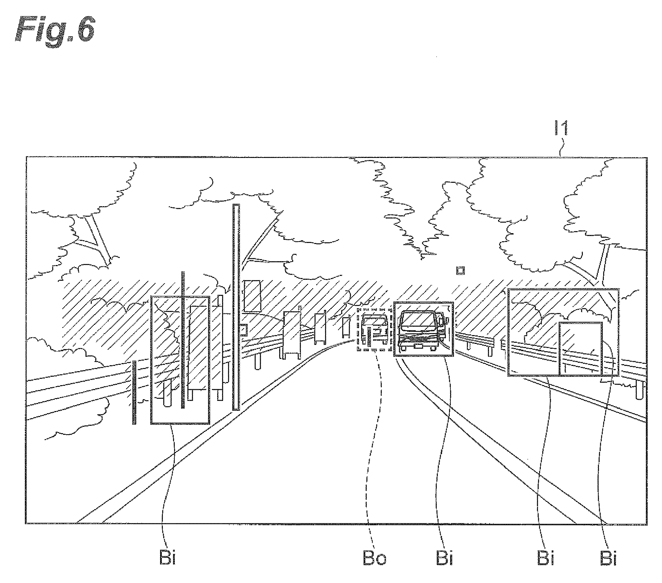

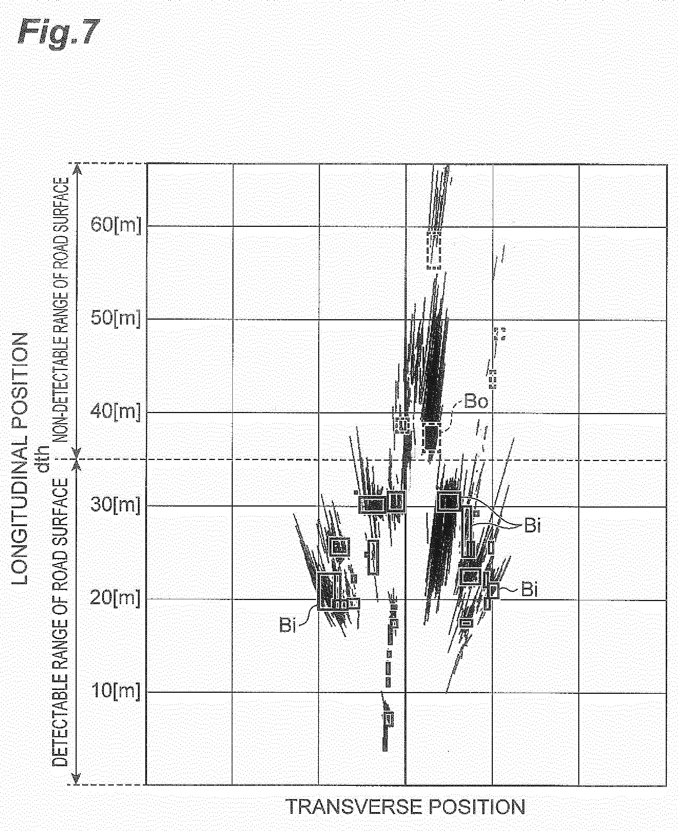

Hereinafter, an example of the detection result of the stereoscopic object detection device 1 of this embodiment will be described. A stereoscopic object Bi detected in a solid-line frame of an image I1 of FIG. 6 and an overhead view plane of FIG. 7 is a stereoscopic object which is detected based on the detection result of the first detection unit 11 within a range where a road surface is detectable. A stereoscopic object Bo detected in a broken-line frame of FIGS. 6 and 7 is a stereoscopic object which is detected based on the detection result of the first detection unit 11 within a range where the road surface is not detectable. In the example of FIGS. 6 and 7, since an oncoming vehicle exists within a range where the road surface is detectable, the oncoming vehicle is detected based on the detection result of the first detection unit 11 from image data of the stereo camera 3. Since roadside objects, such as signboards and guardrails, exist within a range where the road surface is detectable, the roadside objects are detected based on the detection result of the first detection unit 11 from image data of the stereo camera 3. With this, it is possible to detect the roadside objects, which are rarely detected by the millimeter-wave radar 6, with high accuracy.

In the example of FIGS. 6 and 7, since a preceding vehicle exists within a range where the road surface is not detectable, the preceding vehicle is detected based on the detection result of the second detection unit 12 using the millimeter-wave radar 6 as indicated by a plurality of detection points in FIG. 7 along with the detection result of the first detection unit 11 from image data of the stereo camera 3. In the example of FIG. 7, since the stereoscopic object which is the preceding vehicle is detected based on the detection result of the first detection unit 11 and the stereoscopic object which is the preceding vehicle is detected based on the detection result of the second detection unit 12, the existence of the stereoscopic object which is the preceding vehicle is detected by the detection control unit 13.

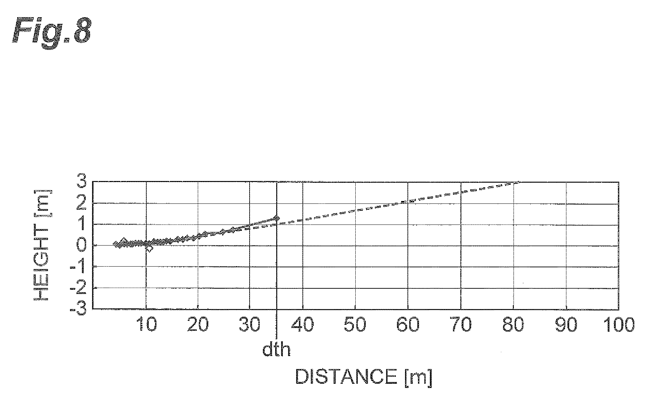

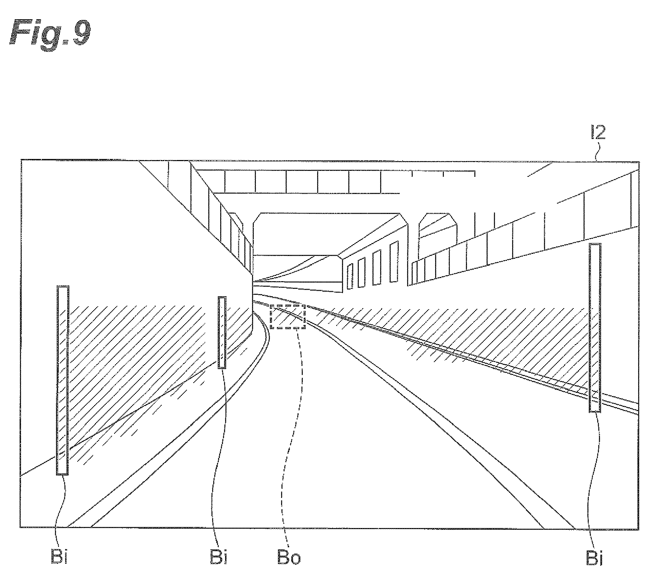

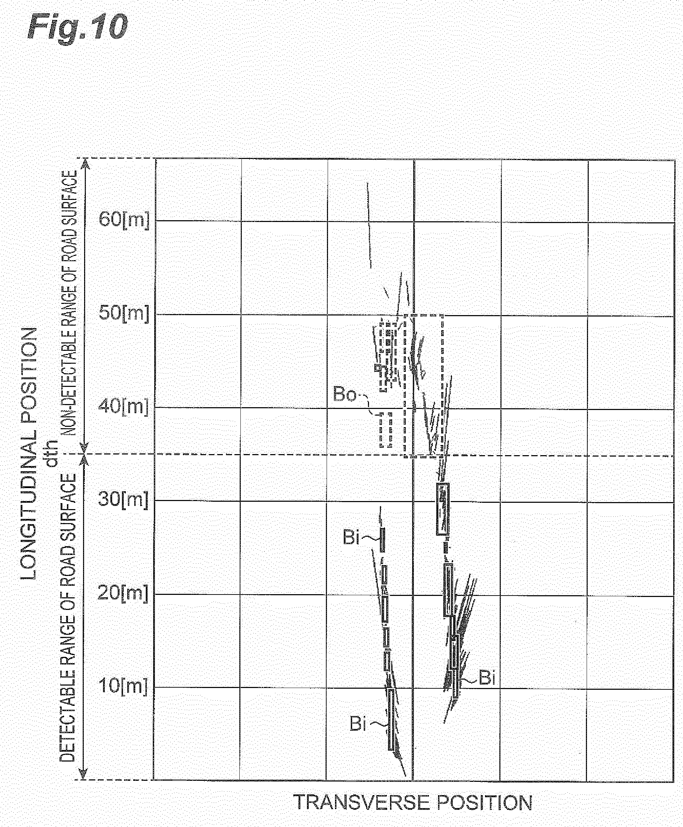

As shown in FIG. 8, a detection result for a stereoscopic object in a situation in which there is a rapid change in the gradient of a road surface is shown in FIGS. 9 and 10. As shown in an image I2 of FIG. 9 and an overhead view plane of FIG. 10, since there is a rapid change in the gradient of the road surface and the pattern of the road surface exists within a range where the road surface is not detectable, in the detection result of the first detection unit 11, the pattern of the road surface within a range where the road surface is not detectable is erroneously detected as a stereoscopic object Bo. However, as shown in FIG. 10, the stereoscopic object is detected based on the detection result of the second detection unit 12 using the millimeter-wave radar 6 along with the detection result of the first detection unit 11 within a range where the road surface is not detectable. In the example of FIG. 10, while the stereoscopic object Bo which is the pattern of the road surface is detected in the detection result of the first detection unit 11, the stereoscopic object Bo which is the pattern of the road surface is not detected in the detection result of the second detection unit 12; thus, the existence of the stereoscopic object Bo which is the pattern of the road surface is not detected by the detection control unit 13. With this, it is possible to prevent erroneous detection.

As shown in FIG. 2, as a vehicle control step, vehicle control for controlling one of acceleration, deceleration, and steering of the vehicle according to the distance, position, size, speed, and the like of the stereoscopic object detected by the detection control unit 13 is executed by the vehicle control unit 14 of the ECU 2 of the stereoscopic object detection device 1 (S7). For example, when the distance between the stereoscopic object and the vehicle is equal to or less than a predetermined distance threshold value, deceleration of the vehicle by the brake actuator of the actuator 7 is controlled by the vehicle control unit 14.

According to this embodiment, since the stereoscopic object is detected by the detection control unit 13 based on the detection result of the first detection unit 11 which has high reliability since the road surface is detectable within a range where the road surface is detectable by the first detection unit 11, it is possible to detect the stereoscopic object with high accuracy. Furthermore, since the stereoscopic object is detected by the detection control unit 13 based on the detection result of the first detection unit 11 which has low reliability since the road surface is not detectable and the detection result of the second detection unit 12 by the millimeter-wave radar 6 with high reliability within a range where the road surface is not detectable by the first detection unit 11, it is possible to detect the stereoscopic object with high accuracy even within a range where the road surface is not detectable by the first detection unit 11. Therefore, it is possible to improve the reliability of detection of the stereoscopic object.

The stereoscopic object which is not detected by the first detection unit 11 within a range where the road surface is not detectable by the first detection unit 11, whose continuous detection frequency by the first detection unit 11 within a range where the road surface is detectable by the first detection unit 11 exceeds the detection frequency threshold value, and for which the detection result of the first detection unit 11 is considered to have high reliability is detected by the detection control unit 13 based on the detection result of the first detection unit 11, and the stereoscopic object which does not satisfy the condition is detected by the detection control unit 13 based on the detection results of the first detection unit 11 and the second detection unit 12; thus, it is possible to prevent the stereoscopic object from being detected based on an erroneous detection result of the first detection unit 11.

The vehicle control for controlling one of acceleration, deceleration, and steering of the vehicle according to the stereoscopic object detected by the detection control unit 13 with high reliability is executed by the vehicle control unit 14; thus, it is possible to prevent the vehicle control, such as brake operation, from being executed based on an erroneous detection result.

The stereoscopic object detection device and the stereoscopic object detection method according to the embodiment of the invention is not limited to the above-described embodiment, and various alterations can of course be made without departing from the gist of the embodiment of the invention.

For example, in the foregoing embodiment, instead of determining whether or not the stereoscopic object is detected by the first detection unit 11 within a range where the road surface is not detectable by the first detection unit 11 and the continuous detection frequency of the stereoscopic object by the first detection unit 11 within a range where the road surface is detectable by the first detection unit 11 exceeds the threshold value, simply, the detection control unit 13 may detect the stereoscopic object based on the detection result of the first detection unit 11 within a range where the road surface is detectable by the first detection unit 11, and may detect the stereoscopic object based on the detection result of the second detection unit 12 or the detection results of the first detection unit 11 and the second detection unit 12 within a range where the road surface is not detectable by the first detection unit 11. With this, it is possible to reduce a calculation load. In the foregoing embodiment, the vehicle control according to the stereoscopic object detected by the detection control unit 13 may not necessarily be executed, and only the detection of the stereoscopic object may be simply performed.

## Claims

1. A stereoscopic object detection device comprising:
a first detection unit configured to detect a road surface and a stereoscopic object in the surroundings of a vehicle based on image data representing a plurality of images having parallax acquired by imaging the surroundings of the vehicle with an in-vehicle camera from different points of view;
a second detection unit configured to detect the stereoscopic object by a millimeter-wave radar; and
a detection control unit configured to detect the stereoscopic object based on the detection result of one of the first detection unit and the second detection unit,
wherein the detection control unit detects the stereoscopic object based on the detection result of the first detection unit within a range where the road surface is detectable by the first detection unit, and
the detection control unit detects the stereoscopic object based on the detection results of the first detection unit and the second detection unit within a range where the road surface is not detectable by the first detection unit.

2. The stereoscopic object detection device according to claim 1,
wherein, for the stereoscopic object which is not detected by the first detection unit within a time set in advance within a range where the road surface is not detectable by the first detection unit, and whose continuous detection frequency by the first detection unit within a range where the road surface is detectable by the first detection unit exceeds a threshold value, the detection control unit detects the stereoscopic object based on the detection result of the first detection unit, and
for the stereoscopic object which is not detected by the first detection unit within the time set in advance within a range where the road surface is not detectable by the first detection unit, and whose continuous detection frequency by the first detection unit within a range where the road surface is detectable by the first detection unit is equal to or less than the threshold value, the detection control unit detects the stereoscopic object based on the detection results of the first detection unit and the second detection unit.

3. The stereoscopic object detection device according to claim 1 or 2, further comprising:
a vehicle control unit configured to execute vehicle control for controlling one of acceleration, deceleration, and steering of the vehicle according to the stereoscopic object detected by the detection control unit.

4. A stereoscopic object detection method comprising:
a first detection step of detecting a road surface and a stereoscopic object in the surroundings of a vehicle based on image data representing a plurality of images having parallax acquired by imaging the surroundings of the vehicle with an in-vehicle camera from different points of view by a first detection unit of a stereoscopic object detection device;
a second detection step of detecting the stereoscopic object by a millimeter-wave radar by a second detection unit of the stereoscopic object detection device; and
a detection control step of detecting the stereoscopic object based on the detection result of one of the first detection step and the second detection step by a detection control unit of the stereoscopic object detection device,
wherein, in the detection control step,
the stereoscopic object is detected based on the detection result of the first detection step by the detection control unit within a range where the road surface is detectable by the first detection unit, and
the stereoscopic object is detected based on the detection results of the first detection step and the second detection step within a range where the road surface is not detectable by the first detection unit.

5. The stereoscopic object detection method according to claim 4,
wherein, in the detection control step,
for the stereoscopic object which is not detected by the first detection unit within a time set in advance within a range where the road surface is not detectable by the first detection unit, and whose continuous detection frequency by the first detection unit within a range where the road surface is detectable by the first detection unit exceeds a threshold value, the stereoscopic object is detected based on the detection result of the first detection unit by the detection control unit, and
for the stereoscopic object which is not detected by the first detection unit within the time set in advance within a range where the road surface is not detectable by the first detection unit, and whose continuous detection frequency by the first detection unit within a range where the road surface is detectable by the first detection unit is equal to or less than the threshold value, the stereoscopic object is detected based on the detection results of the first detection unit and the second detection unit by the detection control unit.

6. The stereoscopic object detection method according to claim 4 or 5, further comprising:
a vehicle control step of executing vehicle control for controlling one of acceleration, deceleration, and steering of the vehicle according to the stereoscopic object detected by the detection control unit by a vehicle control unit of the stereoscopic object detection device.
